Europäisches Patentamt

European Patent Office

Office européen des brevets

(11) Publication number: **0 134 684**
**A2**

# (12) EUROPEAN PATENT APPLICATION

(21) Application number: **84305081.6**

(22) Date of filing: **26.07.84**

(51) Int. Cl.⁴: **G 01 V 1/22**
**G 01 V 1/38**

(30) Priority: **18.08.83 US 524265**

(43) Date of publication of application:
**20.03.85 Bulletin 85/12**

(84) Designated Contracting States:
**DE FR NL**

(71) Applicant: **MOBIL OIL CORPORATION**
**150 East 42nd Street**
**New York New York 10017(US)**

(72) Inventor: **Keckler, William George**
**7628 Fall Meadow Lane**
**Dallas Texas 75248(US)**

(72) Inventor: **Thomas, Stephen Walter**
**7123 Wester Way**
**Dallas Texas 75248(US)**

(74) Representative: **West, Alan Harry**
**Mobil Court 3 Clements Inn**
**London WC2A 2EB(GB)**

(54) Low noise digital seismic streamer and method of marine seismic exploration.

(57) A streamer for towing behind a marine vessel engaged in seismic exploration comprises a plurality of substantially identical modules connected serially to one another, each comprising: plural hydrophone means 36 for detecting reflected acoustic waves, and outputting analog electronic signals in response thereto; digitizing means 42 for converting said analog signals to digital representations thereof; and means for transmission of said digital representations along conductor means 58 comprised in said modules up said streamer to said vessel for recording.

EP 0 134 684 A2

Croydon Printing Company Ltd

## LOW NOISE DIGITAL SEISMIC STREAMER
## AND METHOD OF MARINE SEISMIC EXPLORATION

This invention relates a low noise digital seismic streamer and a method of marine seismic exploration using such a steamer.

It is now common practice to explore the oceans of the earth for deposits of oil, gas and other valuable minerals by seismic techniques in which an exploration vessel imparts an acoustic wave into the water, typically by use of a compressed air "gun." The acoustic wave travels downwardly into the sea bed and is reflected at the interfaces between layers of materials having varying acoustic impedances back upwardly where it can be detected by microphones or "hydrophones" in a streamer towed by the ship. The analog signals output by the hydrophones are typically transmitted to the vessel where they are digitized and stored for later processing and analysis.

One problem which has plagued this seismic exploration art since its inception is that of noise inadvertently recorded together with the analog signals of interest. It should be recognized first that the output from the hydrophones is in the form of a very faint signal and that this low signal level is obviously very susceptible to noise. Noise in the marine exploration environment can come from many sources and takes many forms. Noise is generated by the towing ship, by other shipping in the vicinity, and by vibration of the

2040 - 2 - 0134684

streamer both along its length and side-to-side with respect to the direction of travel. Furthermore, the analog signals are degraded during transmission along the relatively long distance (of the order of several miles) from the end of the streamer to the vessel. Crosstalk is also possible between the numerous wires which carry the analog signals in the usual scheme. The turbulence generated by towing the streamer through the water is also a source of substantial noise. Noise, in the sense of distortion of the signal, is also be generated by inaccuracy in the digitization processes.

It will be apparent to those skilled in the art that various of these problems should be attacked in various ways. For example, the last mentioned problem, noise caused by digitization, can be reduced by the techniques described in British Published Patent Application Nos. 2130829 and 2131241. The present invention has as its object reduction of noise arising from certain other of the sources mentioned.

Accordingly, the invention resides in one aspect in a streamer for towing behind a marine vessel engaged in seismic exploration, wherein the vessel includes means for emitting an acoustic wave into the sea, said wave travelling downwardly in the sea into the sea bed and being reflected at interfaces between rock layers of varying acoustic impedance and being reflected back upwardly, and means for recording digital signals, and wherein said streamer comprises a plurality of substantially identical modules connected serially to one another, each comprising: plural hydrophone means for detecting said reflected wave and outputting an analog electronic signal in response thereto; digitizing means for converting said analog signal to a digital representaion thereof; and means for transmission of said digital representation along conductor means comprised in said modules up said streamer to said vessel for recording.

In a further aspect, the invention resides in a method of seismic exploration comprising the steps of: emitting an acoustic wave into the sea from a marine vessel, said acoustic wave travelling downwardly in the sea and into the sea bed to be reflected back upwardly at interfaces between rock layers of varying density; detecting return of said acoustic wave to the vicinity of the surface of the sea with plural hydrophones towed in a streamer behind said vessel, said hydrophones being adapted to generate analog signals upon detection of said waves; digitizing said signals in said streamer to provide digital data word representations thereof; and transmitting said digital data words to said vessel for recording.

The invention achieves the above mentioned needs of the art and objects of the invention by its provision of a marine streamer for seismic exploration in which the analog signals output by the hydrophones are converted to digital representations thereof within the streamer itself. The digital signals can then be transmitted to the vessel for recording without degradation due to the digital signal's relative insensitivity to transmission noise. The digital signals are multiplexed prior to being transmitted which eliminates crosstalk and allows significant reduction of the number of wires required in the streamer. This in turn allows design of a streamer which does not allow as much noise to be sensed by the hydrophones as it is towed through the water.

In the accompanying drawings:

Fig. 1 is an overall view of a seismic exploration system according employing a streamer according to one example of the invention;

Fig. 2 is a more detailed view of the streamer used in the system of Fig. 1;

Fig. 3 is a cross-sectional view of a portion of the active part of the streamer; and

Fig. 4 is a schematic version of the electronic circuitry employed in the streamer.

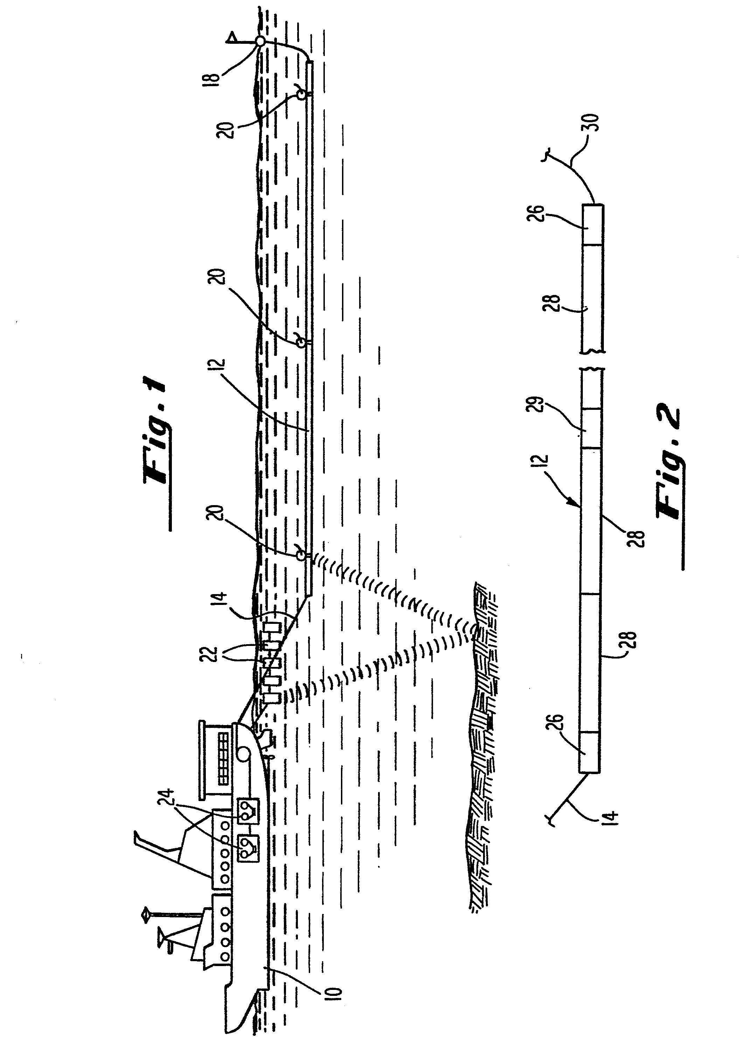

Referring to Fig. 1, a seismic exploration vessel 10 tows a streamer cable 12 behind it by way of a tow cable 14. The streamer 12 may comprise a rear buoy 18 if necessary. The streamer 12 is additionally provided with one or more levelling devices or "birds" 20 which serve precisely to regulate the depth of the streamer 12 within the water. The seismic vessel also tows compressed air guns 22 or other sources of acoustic energy which generate an acoustic wave in the water which travels downwardly as shown, reflects at interfaces within the sea bed and is detected by the hydrophones of the streamer 12.

As well described in more detail below, the analog signals generated by the hydrophones within the streamer 12 upon receipt of the reflected wave are converted to digital format by analog to digital converters also comprised in the streamer, and are transmitted in digital form along the streamer 12 and up the tow cable 14 to be recorded by recording devices 24 carried on board the ship 10.

As shown in Fig. 2, the streamer 12 also includes one or more vibration isolation modules 26 so as to isolate streamer 12 from any motion of the tow cable 14 or the tail buoy 18, or from shipboard vibration transmitted down the tow cable 14 to the streamer 12. The vibration isolation modules 26 will typically comprise a relatively compliant tubular member, having one or more internal stretching members. The vibration isolation modules 26 should also be designed so as to avoid setting up any resonating cavities or traps for acoustic waves so as to avoid amplifying any noise.

In addition, the streamer 12 is divided into a plurality of streamer modules 28 which, as will be discussed in further detail below, are designed to divide the streamer 12 into convenient units of length. These modules 25 are preferably identical so that they can be interchanged when desired for repair or replacement. In a preferred embodiment the modules 28 would be about 100 meters long and a typical streamer assembly might comprise 35 such modules for a total length of approximately 3500 meters. An optional repeater module 29 is also shown.

The streamer 12 is then terminated with a vibration isolation module 26 and a cable 30 leading to the buoy 18, as discussed above in connection with Fig. 1.

In a preferred embodiment each of the modules 28 is divided into eight to sixteen submodules. Each submodule in turn provides two channels of seismic information which are digitized and transmitted up the streamer 12 to the vessel 10 for recording. In turn, each channel may comprise a number of hydrophones connected as one to increase the signal strength and discriminate against directional noise. In a presently envisioned embodiment between 7 and 20 hydrophones are used per channel with the optimum being 14. In an example, then, 14 hydro- phones are provided per channel, two channels per submodule, 8 submodules per module and 35 modules per streamer. This results in a total of nearly 8000 hydrophones, organized into some 560 channels. It will be appreciated by those skilled in the art that this represents an enormous amount of data gathering capacity which is only made possible by putting the digitizers in the streamer. If direct transmission of analog signals were to be attempted in an analog streamer with so many channels, crosstalk and signal degradation would undoubtedly occur. The complex couplings between sections required by analog streamers are also unreliable and cause frequent operational problems. While repeaters 29 may be required in order to permit use of the 3500 meter extended streamer length, an improvement over analog techniques is still expected, because the digitized signals are not subject to signal degradation due to being transmitted up long lines as are analog signals, as discussed previously. Finally, additionally providing multiplexing capability in the streamer greatly reduces the number of actual wires which need to be physically packed into the streamer, simplifies the connection between modules, and allows the streamer to be made acoustically quieter and possibly with a smaller diameter.

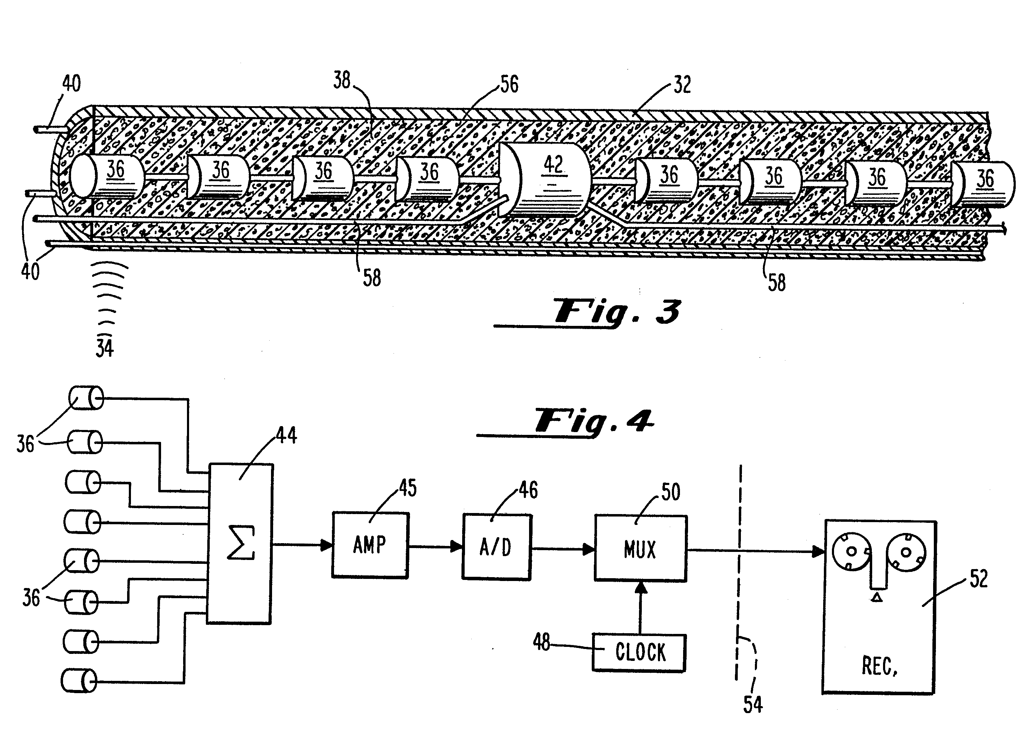

Referring now to Fig. 3, the basic enclosure of the streamer is a tube 32 which is substantially transparent to an acoustic wave arriving as at 34 so that the wave is transmitted to the hydrophones shown at 36 and located within the streamer. The hydrophones 36 themselves are conventional piezoelectric devices; obviously, it is desirable that they be as compact as possible. The transmission of the acoustic wave 34 to the hydrophones within the tube 32 is accomplished by filling the tube with a light oil or other suitable acoustic wave transmission medium. The oil is selected both for its transmissive qualities and in order to control the density of the streamer as a whole, which desirably floats at a given depth, e.g., 30 feet, so that the levelling devices 20 (Fig. 1) need not exert substantial force on the water during towing,
which would cause additional turbulence and noise.  The
hydrophones 36 are generally located within the tube 32 by an
open-celled foam material 38.  The foam 38 generally fills
whatever volume of the tube remains after assembly of the
streamer's electronic components, and is preferably 80-95% void
space, again to reduce acoustic impedance.  Additional
supporting "spiders" could also be used as desired; if so,
their design should be carefully chosen to  minimize  any
acoustic  impedance they might present.  For example, the
spiders might comprise resilient tubes, inserted between the
hydrophones (and other electronic modules discussed below) and
the tube wall, so as to assume a kidney shape in cross-section.

The tube 32 can be made of a variety of materials.
For example, a polyvinylchloride hose, reinforced with Kevlar
cords 40, might be used.  Polyurethane or a high damping factor
rubber material could also be used for the hose walls.  Again,
in a preferred embodiment, Kevlar cords 40 are used for
strengthening.  This material is a flexible aramid fiber known
to have a very high strength to weight ratio and hence provides
a useful reinforcement for whatever hose material is used.

The signals from the hydrophones 36 are summed and
digitized in an electronics module 42, generally located
between the hydrophones of the channel, as shown.  The module
42 is also surrounded by the open-cell foam and is desirably
implemented by high packing factor integrated circuitry
preferably using so-called large scale integrated circuitry.

The electronics module 42 performs several functions
shown schematically in Fig. 4.  The signals received from all
the hydrophones 36 of a given channel are summed at 44.

Preamplification might be performed at this point as indicated
at 45. A digital representation of the analog signals is
generated at 46, again as indicated in Published British Patent
Applications Nos. 2130829 and 2131241. The digital
representation is transmitted at 50 when a multiplexing signal
is detected. As shown in Fig. 4 a clock 48 provides the
synchronization required to multiplex the signal. Preferably a
single clock 48 per streamer controls the multiplexing
operation. The digitized, multiplexed signals are then passed
up the streamer, indicated by the dotted line 54, and are
recorded on a shipboard recorder 52 (24 in Fig. 1).

Returning now to the discussion of Fig. 3, it will be
appreciated that the spaces between the hydrophones 36 and the
digitizing module 42 are also filled with open-cell foam as at
56. In this connection, it is important to note that open-cell
foam is used because it does not resist the flow of the fill
fluid. It is very important that such impedance
discontinuities are avoided because such discontinuities cause
reflection and scattering of the pressure waves within the
streamer itself. Substantial noise in the signals output by
the hydrophones can result from this phenomenon.

Digitizing of the signal within the streamer and
transmission of the digital signals up the cable to the vessel
to be recorded on recorder 52 provides many advantages.
Furthermore, distribution of the electronic components between
the several modules itself provides advantages. For example,
the paths of analog signals are kept short, less than one
submodule, and, consequently, less noise is introduced. No
inter-module analog signal connections, which are susceptible
to noise, need be made. Use of distributed electronics also eliminates heavy electronics modules which cause heavy spots in the streamer and make it difficult to properly ballast. As discussed above, in the preferred embodiment, analog-to-digital converters 46 as disclosed in Published British Patent Applicatons Nos. 2130829 and 2131241 are used. These are expected to provide high signal-to-noise ratios with low distortion and are anticipated to be manufacturable within a very small package size.

Use of the digitizing streamer with a multiplexing system to select digital words in sequence for transmission means that fewer signal wires need to be used. Typically the digital words generated are transmitted a bit at a time, over a coaxial cable or the like. One or more control wires and power connections would be required as well. All the wires are preferably bundled into one cable 58 for convenience of connection. Despite the apparent complexity of this system, it represents a substantial reduction in the number of wires which would be required if pairs of individual analog signal wires corresponding to each channel were used. As noted the electronic modules 42 could also contain amplifiers 45 to preamplify the analog signals prior to digitization. Repeaters for the digital signals received from further down the streamer may be separately provided, as shown at 29 in Fig. 2, because it is not anticipated that such will be needed in each module 28.

Use of the Kevlar fibers as strengthening members provides several advantages as well. As noted above, this flexible material exhibits a high strength-to-weight ratio. Accordingly, it can be used integrally with the walls of the tube to prevent stretching of the streamer modules at their upstream termination and bagging at their downstream ends. The termination of the Kevlar members can be made in a simple fashion by inserting the fibers into the smaller orifice of a tapered hole in a bushing, fuzzing them outwardly, and potting the fuzzed end in an epoxy, so that the epoxy/Kevlar wedge thus formed is pulled more firmly into engagement with the tapered hole in the bushing when stress is applied to the Kevlar member from the direction opposite the insertion. The bushings of adjacent modules can be connected to one another; the electronic connections can be made using plugs centered in the terminal members.

The construction shown in Fig. 3 also allows the filling oil to move readily through the open-celled foam and around the hydrophones and electronic modules, so as to prevent reflection of the acoustic wave within the streamer.

Claims:

1.  A streamer for towing behind a marine vessel
engaged in seismic exploration, wherein the vessel includes
means for emitting an acoustic wave into the sea, said wave
traveling downwardly in the sea into the sea bed and being
reflected at interfaces between rock layers of varying acoustic
impedance and being reflected back upwardly and means for
recording digitial signals; and wherein said steamer comprises a
plurality of substantially identical modules connected serially
to one another, each comprising:

plural hydrophone means for detecting said
reflected wave and outputting an analog electronic signal in
response thereto;

digitizing means for converting said analog signal
to a digital representation thereof; and

means for transmission of said digital
rpresentation along conductor means comprised in said modules up
said streamer to said vessel for recording.

2.   The streamer of claim 1 wherein plural hydrophones
are connected to means for summing of said analog signals prior
to digitization thereof.

3.   The streamer of claim 1 further comprising
multiplexing means for sequentially selecting data words from
the digitizing means for transmission to said vessel.

4.    A method of marine seismic exploration comprising
the steps of:

emitting an acoustic wave into the sea from a
marine vessel, said acoustic wave traveling downwardly in the
sea and into the sea bed to be reflected back upwardly at
interfaces between rock layers of varying density;

detecting return of said acoustic wave to the
vicinity of the surface of the sea with plural hydrophones towed
in a streamer behind said vessel, said hydrophones being adapted
to generate analog signals upon detection of said waves;

digitizing said signals in said streamer to
provide digital data word representations thereof; and

transmitting said digital data words to said
vessel for recording.


5.    The method of claim 4 wherein the output signals
of sets of said hydrophones are summed prior to digitization to
generate said data words.


6.    The method of claim 4 wherein the data words are
multiplexed for transmission up said streamer for recording on
said vessel.


7.    The method of claim 4 wherein said streamer
comprises a plurality of substantially identical modules, and
said digitizing step is performed in individidual digitizing
means located within said modules.


3342H/0212H

_Fig.1_

_Fig.2_

**Fig. 3**

**Fig. 4**

0134684